Europäisches Patentamt

European Patent Office

Office européen des brevets

(19)

(11) EP 0 599 729 B1

(12) FASCICULE DE BREVET EUROPEEN

(45) Date de publication et mention
de la délivrance du brevet:
08.01.1997 Bulletin 1997/02

(51) Int Cl.⁶: **F02D 21/08**, F02D 41/14,
F02D 41/26, F02M 25/07

(21) Numéro de dépôt: 93402842.4

(22) Date de dépôt: 23.11.1993

(54) **Procédé de contrôle du système de recirculation des gaz d'échappement d'un moteur à combustion interne**

Verfahren zur Steuerung der Abgasrückführung bei einer Brennkraftmaschine

Method for controlling the exhaust gas recirculation in an internal combustion engine

(84) Etats contractants désignés:
DE ES GB IT

(30) Priorité: 24.11.1992 FR 9214071

(43) Date de publication de la demande:
01.06.1994 Bulletin 1994/22

(73) Titulaire: **Société Anonyme dite: REGIE NATIONALE DES USINES RENAULT**
92109 Boulogne Billancourt (FR)

(72) Inventeurs:
• **Hornewer, Jean-Marc**
**F-95800 Cergy-Le-Haut (FR)**
• **Cozler, Daniel**
**F-78780 Maurecourt (FR)**

(56) Documents cités:
EP-A- 0 440 173          EP-A- 0 490 392
DE-A- 4 122 377

• PATENT ABSTRACTS OF JAPAN vol. 14, no. 527 (M-1050)20 Novembre 1990 & JP-A-22 021 668 (TOYOTA MOTOR CORP.) 4 Septembre 1990
• PATENT ABSTRACTS OF JAPAN vol. 7, no. 287 (M-264)(1432) 21 Décembre 1983 & JP-A-58 160 530 (TOYOTA JIDOSHA KABUSHIKI KAISHA) 24 Septembre 1983

## Description

La présente invention concerne un procédé de contrôle du système de recirculation des gaz d'échappement à l'admission d'un moteur à combustion interne équipant notamment un véhicule automobile.

Les normes concernant la pollution et la consommation des moteurs à combustion interne équipant les véhicules automobiles, se sévérisent chaque jour davantage dans l'ensemble des pays industrialisés. L'industrie automobile est donc aujourd'hui occupée à trouver des solutions techniques pour répondre à ces obligations et ce, sans trop pénaliser ni les performances des moteurs ni leur prix de revient.

Une technique connue de dépollution des moteurs à combustion interne consiste à opérer la recirculation des gaz d'échappement afin de diminuer les émissions de polluants et plus particulièrement les oxydes d'azote. Cette technique appelée E.G.R. (Exhaust Gas Recirculation) consiste à réinjecter une partie des gaz brûlés dans le collecteur d'admission du moteur, ce qui a pour effet de réduire la quantité de gaz à brûler et par voie de conséquence d'abaisser la température de combustion, d'où une diminution de la production des NOx ou oxydes d'azote.

Le dispositif de mise en oeuvre le plus souvent adopté est celui de la recirculation externe, par opposition à la recirculation interne générée par le croisement des soupapes d'admission et d'échappement. Pour ce faire un conduit de liaison relie le collecteur d'échappement et le collecteur d'admission, les gaz d'échappement sont alors aspirés à travers ce conduit par la dépression naturelle du moteur et réintroduits à l'admission dans le flux d'air comburant. Le conduit est équipé d'une vanne qui permet de commander la quantité de gaz d'échappement réintroduits à l'admission suivant les conditions de fonctionnement du moteur et en particulier suivant le niveau de puissance demandé au moteur. Pour ce faire, la vanne, généralement appelée vanne E.G.R., est directement pilotée par le système électronique de contrôle moteur qui ajuste le taux de recirculation suivant les phases de fonctionnement du moteur.

Cette vanne E.G.R. présente toutefois l'inconvénient d'être sujette à des dérèglements pouvant engendrer des dysfonctionnements du moteur et donc des émissions de substances polluantes accrues. En effet, la vanne E.G.R. est soumise à l'agression des gaz d'échappement fortement corrosifs et son encrassement progressif tend à modifier les caractéristiques du débit des gaz d'échappement pour une même consigne délivrée par le système de contrôle moteur.

Dans le cadre des futures réglementations antipollution telles que la norme américaine OBD2 (On Board Diagnostic Level 2), il est prévu que les systèmes électroniques de contrôle moteur qui équipent les véhicules particuliers soient amenés à diagnostiquer et/ou corriger automatiquement certains défauts du moteur qui ont un impact sur les émissions de polluants.

C'est ainsi qu'il est prévu d'implanter dans les systèmes électroniques de contrôle moteur futurs, des dispositifs capables de détecter en roulant des défauts concernant notamment le fonctionnement du système E.G.R. Ces défauts provoqueront lorsqu'il y a défaillance d'un élément agissant sur le niveau de pollution soit, l'activation de modes de fonctionnement dégradés et/ou l'allumage d'un voyant au tableau de bord prévenant le conducteur (réglementations peu sévères) soit, obligeront à la mise en place de mesures correctives ou à l'arrêt du véhicule (réglementations strictes).

Les équipementiers et les constructeurs automobiles ont donc développé un certain nombre de techniques de contrôle du fonctionnement de la vanne E.G.R.

On peut citer à titre d'exemple l'utilisation de tubes de Venturi sur le conduit en sortie de la vanne E.G.R., de moyens de contrôle du déplacement du pointeau de la vanne ou encore de sondes de températures, etc...

On peut également citer le procédé de contrôle décrit dans la demande de brevet n° FR-A-2.674.574, caractérisé en ce que l'on mesure la charge d'admission de gaz dans le moteur en amont et en aval de la sortie du conduit de recyclage, avant et après le pilotage à l'ouverture ou à la fermeture de la vanne, on compare d'abord les mesures de charge en amont de la sortie pour s'assurer d'un fonctionnement en stabilisé du moteur, puis si tel est le cas, on compare les mesures de charge du moteur en aval de la sortie du conduit de recyclage avant et après le pilotage de la vanne, pour déterminer un fonctionnement correct de la vanne en cas de différence entre ces mesures et un défaut de fonctionnement de celle-ci en cas d'égalité entre ces mesures.

Ce dispositif permet de détecter le non fonctionnement de la vanne E.G.R. mais pas un fonctionnement dégradé, de plus ce dispositif comme tous les dispositifs proposés dans l'état de la technique, présente un certain nombre d'inconvénients au niveau de la complexité de sa structure, de son implantation difficile dans le moteur et de la fiabilité même des moyens rajoutés pour contrôler le fonctionnement de la vanne E.G.R.

Le but de l'invention est donc de pallier aux inconvénients de l'art antérieur en proposant un procédé de contrôle du système de recirculation qui permet un diagnostic de la vanne E.G.R. et qui permet d'adapter en conséquence la commande du système de contrôle moteur pour prendre en compte l'éventuelle dérive du fonctionnement de la vanne, grâce à une correction en boucle fermée.

De plus, le procédé selon l'invention offre un rapport coût/prestation bien plus favorable que les procédés de l'art antérieur. Il ne met en oeuvre en effet aucun matériel spécifique et ne nécessite qu'un surcoût logiciel faible.

Le procédé de contrôle du système de recirculation des gaz d'échappement d'un moteur à combustion interne selon l'invention, concerne un système de recirculation du type selon la première partie de la revendication 1 (voir EP-A-440173).

Selon l'invention le procédé est caractérisé en ce qu'il comprend les opérations suivantes :

- calculer alors à partir de chaque valeur Cg_i représentative du couple, une grandeur statistique MCg_i représentative de la moyenne des valeurs Cg_i ;
- calculer l'écart ECg_i de la valeur Cg_i à la moyenne MCg_i ;
- associer à chaque valeur ECg_i et suivant les conditions de fonctionnement du moteur, une valeur Tr_i correspondante au taux de gaz d'échappement réellement recirculé ;
- comparer la valeur Tr_i à la valeur T du taux de recirculation initialement commandé et en déduire en cas de différence un défaut de fonctionnement de la vanne E.G.R.

Selon une autre caractéristique du procédé objet de l'invention, suivant la valeur Tr_i obtenue, la vanne E.G.R. est commandée à l'ouverture ou à la fermeture de façon à faire converger le taux réel Tr de gaz d'échappement recirculé au niveau du taux T.

Selon une autre caractéristique du procédé objet de l'invention, les valeurs MCg_i de ladite grandeur statistique sont calculées à partir de la formule suivante :

$$MCg\_i = MCg\_i\text{-}1 + ((Cg\_i - (MCg\_i\text{-}1)) / F1)$$

où F1 est une constante de filtrage et où MCg_0 = 0.

Selon une autre caractéristique du procédé objet de l'invention, la valeur ECg_i est définie comme étant l'écart type entre Cg_i et MCg_i.

Selon une autre caractéristique du procédé objet de l'invention, les valeurs Tr_i du taux réel de recirculation des gaz d'échappement à l'admission sont déduites d'une cartographie spécifique contenue dans le système de contrôle moteur.

On comprendra mieux les aspects et avantages de la présente invention, d'après la description donnée ci-après de modes de réalisation de l'invention appliqués à un moteur quatre temps et quatre cylindres, ces modes de réalisation étant donnés à titre d'exemples, en se référant au dessin annexé, dans lequel :

- la figure 1 représente schématiquement un dispositif de contrôle du système de recirculation des gaz d'échappement pour la mise en oeuvre du procédé selon l'invention ;

- la figure 2 représente un organigramme illustrant le fonctionnement du procédé selon l'invention ;

- la figure 3 est un graphique montrant l'incidence du taux de recirculation sur l'écart type du couple gaz du moteur à combustion interne.

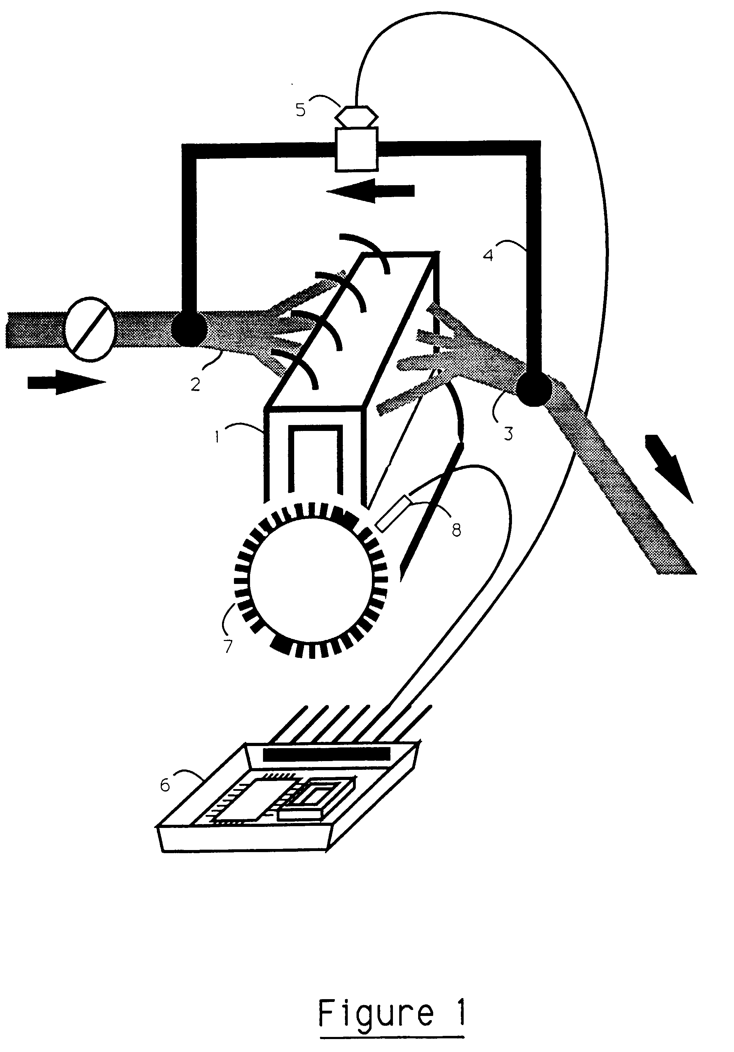

La figure 1 décrit donc un moteur à combustion interne mettant en oeuvre le procédé de contrôle du système de recirculation des gaz d'échappement. Seuls les éléments nécessaires à la compréhension de l'invention ont été figurés.

Le moteur à combustion interne figuré, par exemple du type à quatre temps et à quatre cylindres en ligne, référencé 1, est équipé d'un système de recirculation externe des gaz d'échappement. Un conduit de liaison 4 assure la de recirculation des gaz d'échappement entre la tubulure 3 d'échappement des gaz brûlés et le collecteur 2 d'admission des gaz comburants dans les cylindres du moteur, le sens de circulation des gaz est représenté par des flèches.

Une vanne E.G.R. 5 équipe le conduit de liaison 4 de façon à contrôler la quantité de gaz d'échappement admis à la recirculation. Cette vanne 5 est pilotée par le système électronique de contrôle moteur 6, ce dernier commandant l'ouverture de la vanne 5 pour obtenir un taux prédéterminé de gaz d'échappement présents dans les gaz comburants suivant les conditions de fonctionnement du moteur.

Le système de contrôle du moteur 6 comprend classiquement un calculateur comportant une CPU, une mémoire vive (RAM), une mémoire morte (ROM), des convertisseurs analogiques-numériques (A/D), et différentes interfaces d'entrées et de sorties. Il reçoit différents signaux d'entrée relatifs au fonctionnement du moteur (charge, régime, température d'eau, pression collecteur, etc...), et des organes périphériques, effectue des opérations et génère des signaux de sortie à destination notamment des injecteurs de carburant et des bougies et donc de la vanne E.G.R. 5. Ainsi, une cartographie prédéterminée au banc d'essai est installée dans la mémoire du système de contrôle moteur de façon que ce dernier détermine pour chaque condition de fonctionnement du moteur un signal de commande de la vanne E.G.R. correspondant au taux de recirculation souhaité.

Conformément au procédé objet de l'invention, parmi les calculs effectués par le système de contrôle moteur figure celui d'une grandeur Cg déduite de la rotation de l'arbre moteur et représentative du couple gaz produit par chacune des combustions du moteur. Cette valeur est déduite de l'observation de la rotation d'une couronne de mesure dentée 7, solidaire du volant d'inertie du moteur, par exemple la couronne de type standard montée sur les moteurs à allumage électronique.

A la couronne 7, est associé un capteur fixe 8, par exemple à réluctance variable, qui délivre un signal alternatif de fréquence proportionnelle à la vitesse de défilement des dents de la couronne, c'est-à-dire représentative de la vitesse instantanée du volant. Le passage de ce signal alternatif, de fréquence proportionnelle à la vitesse de défilement des dents de la couronne, à la valeur Cg représentative du couple gaz engendré par chaque combustion du mélange gazeux dans les cylindres du moteur, est opéré par un procédé détaillé dans les demandes de brevet français déposées par la Demanderesse sous les numéros 91/11273 et 91/11274, relatives à un "procédé et dispositif de mesure du couple d'un moteur thermique à combustion interne".

L'objet du procédé de contrôle du système de recirculation des gaz d'échappement selon l'invention, est d'utiliser cette information couple gaz déjà utilisée par le système de contrôle moteur pour d'autres applications telles que la reconnaissance cylindre ou la détection des ratés de combustion, pour contrôler le système de recirculation des gaz d'échappement et notamment le fonctionnement de la vanne E.G.R.

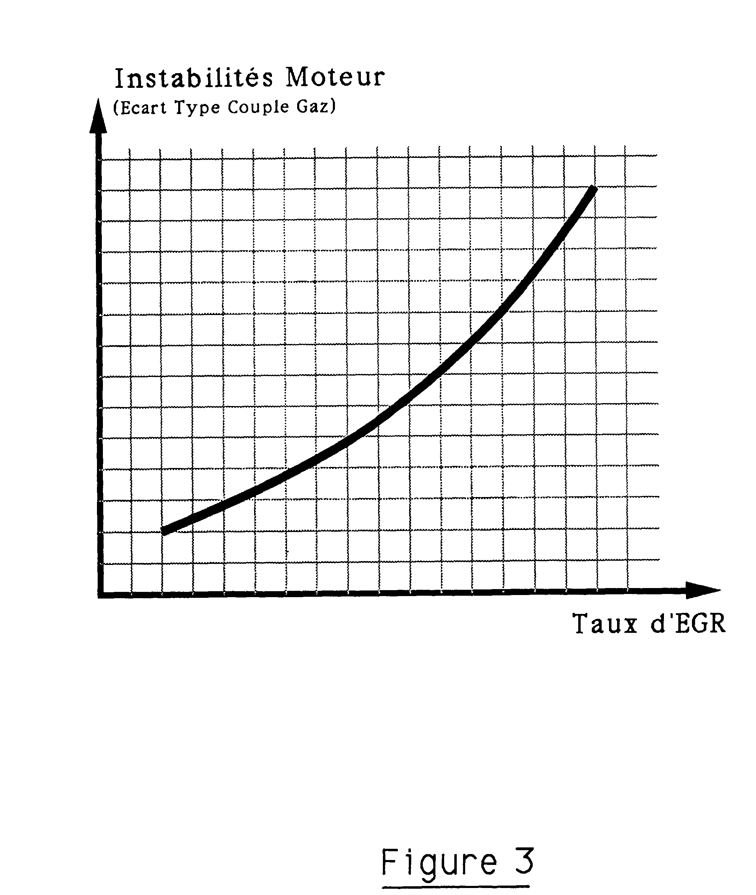

Cette utilisation est permise grâce au constat suivant illustrée par le graphique de la figure 3. La Demanderesse a observé que dans des conditions données de fonctionnement du moteur, les instabilités du moteur (c'est-à-dire les variations des caractéristiques des combustions et donc les variations du couple gaz) sont directement reliées à la quantité de gaz d'échappement recirculée. Il est ainsi possible connaissant le niveau d'instabilité du moteur de déduire le taux d'E.G.R. Or les instabilités du moteur sont directement quantifiables à partir de la connaissance du couple gaz du moteur et plus précisément de l'écart type de ce dernier.

Ainsi en suivant le niveau des instabilités du moteur, à travers les variations du couple gaz, on est à même de suivre le taux de recirculation des gaz brûlés, toute chose étant égale par ailleurs, et donc de diagnostiquer le fonctionnement de la vanne E.G.R. 5 en comparant le taux réel de gaz recirculé et le taux de consigne et d'en déduire un système de commande de cette vanne 5 en boucle fermée.

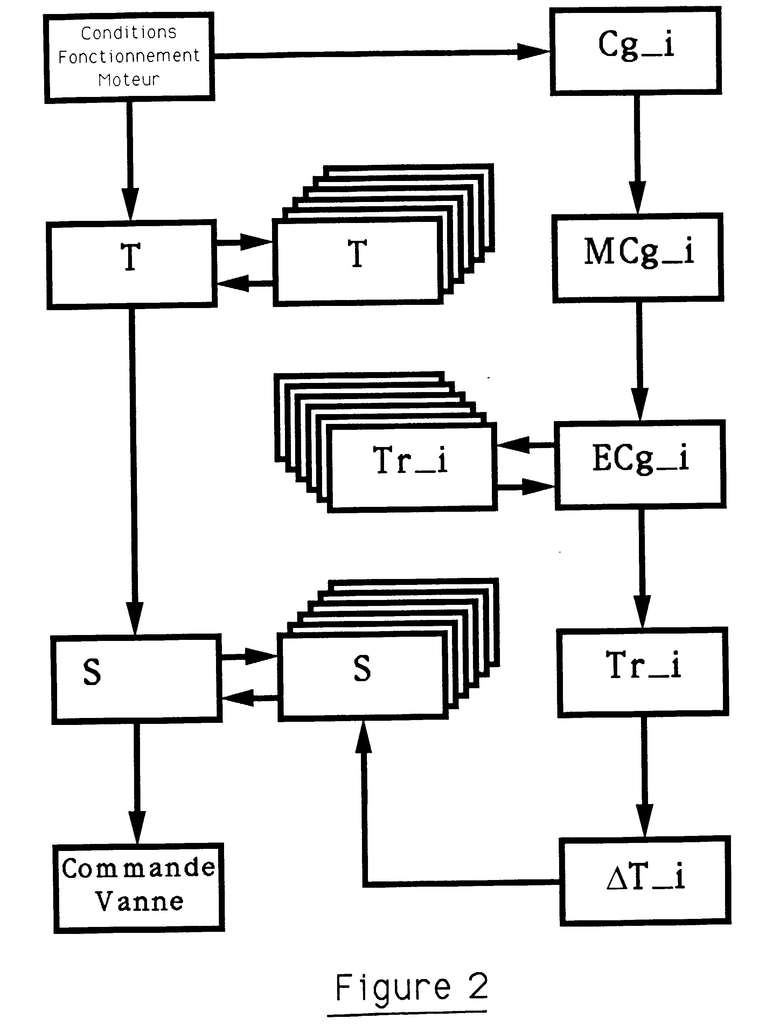

Le procédé de contrôle du système de recirculation des gaz mis en oeuvre par le système de contrôle moteur, comprend donc les étapes suivantes, illustré par l'organigramme de la figure 2.

Le système de contrôle moteur 6 pilote la vanne E.G.R. 5, à partir des conditions de fonctionnement du moteur, pour générer un taux prédéterminé T de recirculation des gaz d'échappement. Cette valeur T du taux d'E.G.R. est lue dans une table ou cartographie initialement stockée dans le système de contrôle moteur. la commande de la vanne E.G.R. est opérée à partir d'un signal d'ouverture S correspondant à la valeur de consigne T à partir d'une table de correspondance appropriée et prédéterminée.

Les valeurs successives du couple gaz Cg, produites pour chaque combustion par les moyens de calcul appropriés à partir de l'analyse de la rotation de la cible 7, font alors l'objet d'un traitement spécifique permettant de contrôler le taux réel de gaz d'échappement recirculé.

On calcule à partir de chaque valeur $Cg\_i$ représentative du couple gaz provoquée par la $i^{eme}$ combustion, une grandeur statistique $MCg\_i$ représentative de la moyenne des valeurs $Cg\_i$ sur un horizon donné de combustions. Cette valeur moyenne est classiquement obtenue par un filtrage numérique du premier ordre : les valeurs $MCg\_i$ sont calculées à partir de la formule suivante :

$$MCg\_i = MCg\_i\text{-}1 + ((Cg\_i - (MCg\_i\text{-}1)) / F1)$$

où F1 est une constante de filtrage et où $MCg\_0 = 0$.

On calcule ensuite l'écart $ECg\_i$ de la valeur $Cg\_i$ à la moyenne $MCg\_i$ ainsi obtenue. Cet écart est calculé de façon préférentielle avec la formule de l'écart type :

$$ECg\_i= ([(MCg\_i)^2\text{-}(cg\_i)^2])^{1/2}$$

On associe alors à chaque valeur $ECg\_i$, et suivant les conditions de fonctionnement du moteur, une valeur $Tr\_i$ correspondante au taux de gaz d'échappement réellement recirculé. Cette valeur est lue dans une table ou cartographie initialement stockée dans le système de contrôle moteur. Cette table est mise au point à partir de mesures effectuées au banc d'essai et reproduites à la figure 3.

Il suffit alors de comparer la valeur $Tr\_i$ à la valeur T du taux de recirculation initialement commandé pour en déduire en cas de différence un défaut de fonctionnement de la vanne E.G.R.

Le système de contrôle moteur pilote alors la vanne E.G.R. en modifiant la valeur du signal d'ouverture S correspondant au taux T souhaité, pour ramener le taux réel Tr au niveau du taux T souhaité. Lorsque le taux Tr a convergé au niveau du taux T, le signal d'ouverture de la vanne 5 correspondant est alors mémorisé et remplace la valeur précédemment contenue. Ainsi lorsque le moteur sera à nouveau dans les mêmes conditions de fonctionnement, les corrections palliant aux dérives de fonctionnement de la vanne 5, sont immédiatement opérationnelles.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

Cette régulation du taux d'E.G.R. peut être réalisée sous diverses formes :

- soit avec des composants d'électronique analogique pour lesquels les sommateurs, comparateurs et autres filtres sont réalisés à l'aide d'amplificateurs opérationnels ;

- soit avec des composants d'électronique numérique qui réaliseraient la fonction en logique câblée ;

- soit par un algorithme de traitement du signal implanté sous forme d'un module logiciel composant d'un système logiciel de contrôle moteur faisant fonctionner le microcontrôleur d'un calculateur électronique.

- soit encore, par une puce spécifique (custom) dont les ressources matérielles et logicielles auront été optimisées pour réaliser les fonctions objet de l'invention : puce microprogrammable ou non, encapsulée séparément ou bien tout ou partie d'un coprocesseur implanté dans un microcontrôleur ou microprocesseur etc.

L'invention est applicable à un moteur à combustion interne quelque soit son cycle de combustion (2 temps, 4 temps), le carburant utilisé diesel ou essence ou encore, le nombre de ses cylindres.

## Revendications

1. Procédé de contrôle du système de recirculation des gaz d'échappement d'un moteur à combustion interne (1) du type comprenant un conduit (4) assurant la liaison entre le collecteur d'échappement (3) et le collecteur d'admission (2), ledit conduit étant muni d'une vanne E.G.R. (5) pilotée à partir du système électronique de contrôle moteur (6) pour assurer la recirculation d'un taux donné de gaz d'échappement, ledit système de contrôle moteur étant équipé de moyens de calcul des valeurs $Cg\_i$ d'une grandeur représentative du couple produit par chacune des combustions du moteur et commandant la vanne E.G.R. à partir des conditions de fonctionnement du moteur pour obtenir un taux prédéterminé T de recirculation des gaz d'échappement, caractérisé en ce qu'il comprend les opérations suivantes :

   - calculer alors à partir de chaque valeur $Cg\_i$ représentative du couple, une grandeur statistique $MCg\_i$ représentative de la moyenne des valeurs $Cg\_i$ ;
   - calculer l'écart $ECg\_i$ de la valeur $Cg\_i$ à la moyenne $MCg\_i$ ;
   - associer à chaque valeur $ECg\_i$ et suivant les conditions de fonctionnement du moteur, une valeur $Tr\_i$ correspondante au taux de gaz d'échappement réellement recirculé ;
   - comparer la valeur $Tr\_i$ à la valeur T du taux de recirculation initialement commandé et en déduire en cas de différence un défaut de fonctionnement de la vanne E.G.R.

2. Procédé de contrôle du système de recirculation des gaz d'échappement selon la revendication 1, caractérisé en ce que suivant la valeur $Tr\_i$ obtenue, la vanne E.G.R. est commandée de façon à faire converger le taux réel Tr de gaz d'échappement recirculé au niveau du taux T.

3. Procédé de contrôle du système de recirculation des gaz d'échappement selon l'une quelconque des revendications 1 à 2, caractérisé en ce que les valeurs $MCg\_i$ de ladite grandeur statistique sont calculées à partir de la formule suivante :

$$MCg\_i = MCg\_i\text{-}1 + ((Cg\_i - (MCg\_i\text{-}1)) / F1)$$

où F1 est une constante de filtrage et où $MCg\_0 = 0$.

4. Procédé selon l'une quelconque des revendications 1 à 3, caractérisé en ce que l'écart $ECg\_i$ entre $Cg\_i$ et $MCg\_i$ est obtenu avec la formule de l'écart type.

5. Procédé selon l'une quelconque des revendications 1 à 4, caractérisé en ce que les valeurs $Tr\_i$ du taux réel de recirculation des gaz d'échappement à l'admission sont déduites d'une cartographie spécifique contenue dans le système de contrôle moteur.

## Patentansprüche

1. Verfahren zur Steuerung des Systems der Rückführung der Abgase einer Brennkraftmaschine (1), mit einer Leitung (4), die den Auspuffkrümmer (3) mit dem Einlaßkrümmer (3) verbindet, wobei diese Leitung mit einem E.G.R.-Ventil (5) versehen ist das gesteuert wird von einem elektronischen Motorsteuerungssystem (6), um die Rückführung einer vorgegebenen Menge an Abgas zu gewährleisten und wobei das Motorsteuerungssystem mit einer Anordnung versehen ist, zur Berechnung der Werte $Cg\_i$ einer Größe, die das bei jeder Verbrennung im Motor entstehende Drehmoment darstellt, und zur Steuerung des E.G.R.-Ventils ausgehend von den Betriebsbedingungen des Motors, zum Erhalt einer vorgegebenen Menge T der Abgasrückführung, dadurch gekennzeichnet, daß es die folgenden Schritte aufweist:

   - Berechnen, ausgehend von jedem das Drehmoment darstellenden Wert $Cg\_i$, einer statistischen Größe $MCg\_i$, die den Mittelwert der Werte $Cg\_i$ darstellt;
   - Berechnen der Abweichung $ECg\_i$ des Wertes Cg vom Mittelwert $MCg\_i$;
   - Zuordnen eines Wertes $Tr\_i$, der der tatsächlich rückgeführten Abgasmenge entspricht, zu jedem Wert $ECg\_i$ in Abhängigkeit von den Betriebsbedingungen des Motors;
   - Vergleichen des Wertes $Tr\_i$ mit dem Wert T der ursprünglich angesteuerten Rückführmenge und, im Fall eines Unterschiedes, Abziehen einer durch Fehlbetrieb des E.G.R.-Ventils bedingten Fehlmenge.

**2.** Verfahren zur Steuerung des Systems der Rückführung der Abgase nach Anspruch 1, dadurch gekennzeichnet, daß in Abhängigkeit von dem erhaltenen Wert Tr_i das E.G.R.-Ventil derart gesteuert wird, daß sich die tatsächlich rückgeführte Abgasmenge Tr dem Wert der Menge T annähert.

**3.** Verfahren zur Steuerung des Systems der Rückführung der Abgase nach einem der Ansprüche 1 bis 2, dadurch gekennzeichnet, daß die Werte Mcg_i der statistischen Größe ausgehend von der folgenden Formel berechnet werden:

$$MCg\_i = MCg\_i\text{-}1 + ((Cg\_i - (MCg\_i\text{-}1)) / F1)$$

wobei F1 eine Filterkonstante und/oder MCg_O = 0 ist.

**4.** Verfahren nach einem der Ansprüche 1 bis 3, dadurch gekennzeichnet, daß die Abweichung ECg_i zwischen Cg_i und MCg_i mit der Abweichungsformel bestimmt wird.

**5.** Verfahren nach einem der Ansprüche 1 bis 4, dadurch gekennzeichnet, daß die Werte Tr_i der tatsächlichen Menge an rückgeführten Abgasen zum Einlaß abgeleitet werden von einer im Motorsteuerungssystem enthaltenen Datenaufzeichnung.

## Claims

**1.** A process for monitoring the exhaust gas recirculating system of an internal combustion engine (1) of the type comprising a conduit (4) providing a connection between the exhaust manifold (3) and the intake manifold (2), said conduit being provided with an E.G.R. valve (5) which is pilot-controlled from the electronic engine management system (6) to provide for recirculation of a given proportion of exhaust gases, said engine management system being provided with means for calculating the values Cg_i of a parameter representative of the torque produced by each of the combustions of the engine and controlling the E.G.R. valve on the basis of the conditions of operation of the engine to produce a predetermined rate T of recirculation of the exhaust gases, characterised in that it comprises the following operations:

- then calculating from each value Cg_i representative of the torque a statistical parameter MCg_i representative of the mean of the values Cg_i;

- calculating the gap ECg_i from the value Cg_i to the mean MCg_i;

- associating with each value ECg_i and in accordance with the conditions of operation of the engine a value Tr_i corresponding to the rate of exhaust gas which is actually recirculated; and

- comparing the value Tr_i to the value T of the rate of recirculation initially controlled and in the event of a difference deducing therefrom a defect in operation of the E.G.R. valve.

**2.** A process for monitoring the exhaust gas recirculating system according to claim 1 characterised in that in accordance with the value Tr_i obtained the E.G.R. valve is controlled in such a way as to cause convergence of the actual rate Tr of exhaust gas recirculated with the level of the rate T.

**3.** A process for monitoring the exhaust gas recirculating system according to either one of claims 1 and 2 characterised in that the values MCg_i of said statistical parameter are calculated on the basis of the following formula:

$$MCg\_i = MCg\_i\text{-}1 + ((Cg\_i - (MCg\_i\text{-}1)) / F1)$$

wherein F1 is a filtering constant and MCg_0= 0.

**4.** A process according to any one of claims 1 to 3 characterised in that the gap ECg_i between Cg_i and MCg_i is obtained with the formula of the standard gap.

**5.** A process according to any one of claims 1 to 4 characterised in that the values Tr_i in respect of the actual rate of recirculation of the exhaust gases to the intake are deduced from a specific mapping contained in the engine management system.

Figure 1

Figure 2

Instabilités Moteur
(Ecart Type Couple Gaz)

Taux d'EGR

Figure 3